Europäisches Patentamt

European Patent Office

Office européen des brevets

(11) Veröffentlichungsnummer: **0 319 658**
**A2**

(12) # EUROPÄISCHE PATENTANMELDUNG

(21) Anmeldenummer: **88114746.6**

(51) Int. Cl.⁴: **G05D 11/13**

(22) Anmeldetag: **09.09.88**

(30) Priorität: **10.12.87 DE 3741817**

(43) Veröffentlichungstag der Anmeldung:
**14.06.89 Patentblatt 89/24**

(84) Benannte Vertragsstaaten:
**DE FR GB IT SE**

(71) Anmelder: **Messerschmitt-Bölkow-Blohm**
**Gesellschaft mit beschränkter Haftung**
**Robert-Koch-Strasse**
**D-8012 Ottobrunn(DE)**

(72) Erfinder: **Euskirchen, Jürgen**
**Weberweg 6**
**D-8899 Waidhofen(DE)**
Erfinder: **Stanke, Jürgen**
**Forststrasse 25** ·
**D-8012 Ottobrunn(DE)**

(54) **Vorrichtung zur Steuerung bzw. Regelung von Gasgemischen.**

(57) Steuer- bzw. Regelvorrichtung für Gasgemische, die Wasserstoff und ggf. Sauerstoff enthalten, zur Änderung der Zusammensetzung des Gemisches in gewünschter Weise, insbesondere kontinuierlich. Eine mikroprozessorgesteuerte Regelschaltung ist mit Hilfe von verschiedener Vorgabeinformation (Muster) und einer Anpassungselektronik für verschiedenartige Anwendungen oder Verbraucher nutzbar.

FIG. 6

EP 0 319 658 A2

## Vorrichtung zur Steuerung bzw. Regelung von Gasgemischen

Die Erfindung betrifft eine Vorrichtung zur Steuerung bzw. Regelung von Gasgemischen, die Wasserstoff und ggf. Sauerstoff enthalten, wobei wenigstens ein Sensor den Ist-Zustand des Gemisches/Bestandteils erfaßt und nach Vergleich mit vorgegebenen Werten über eine Steuer- bzw. Regelstrecke die Zusammensetzung des Gemisches mittels Stellglied in gewünschter Weise geändert wird.

Wasserstoff wird u.a. in Triebwerken für die Raumfahrt insbesondere zum Antrieb von Raketen benutzt, weil aus der gleichen Menge (kg) $H_2$ ungleich viel mehr Schub herausgeholt werden kann als bei Benzin.

Aus dem gleichen Grunde werden zukunftsträchtige weitere Anwendungen für $H_2$ forciert, z.B. für Pkws, Lkws, Düsentriebwerke in der Luftfahrt, für Bootsantriebe und Schiffe und für stationäre Anwendungen von Wärme und/oder Kraft z.B. in Kraftwerken.

Elektrizität läßt sich mit Hilfe von Wasserstoff ganzjährig speichern. Mit Sonnenenergienutzung zur Wasserstoffgewinnung läßt sich ein unerschöpfliches Energiesystem - das einzige im geschlossenen Kreislauf aufbauen.

Wasserstoffmotoren können als Kraftmaschinen betrieben werden. Wasserstoffbrenner und -kessel dienen ebenso zur Wärmeerzeugung wie katalytische Heizer. Brennstoffzellen und motorbetriebene Generatoren dienen der Stromerzeugung.

Wasserstoff läßt sich in photovoltaisch betriebenen Elektrolysezellen gewinnen, dabei entsteht bei stromdurchflossener Zelle an der Kathode Wasserstoff an der Anode Sauerstoff aus der Zersetzung von Wasser. Beide Gase sind nutzbar. Bei der Verbrennung entsteht wieder Wasser.

Mit katalytischen Heizern "verbrennt" Wasserstoff praktisch verlustfrei ohne Flamme und kann im Haushalt. z.B. zur Raumheizung, angewandt werden.

Mit Wasserstoff lassen sich sowohl kleine mobile Einheiten als auch kleine lokale Einheiten, wie Blockheizkraftwerke (für Wärme und Strom) betrieben. Die Möglichkeit der Verflüssigung von $H_2$ läßt ihn auf kleinstem Raume speichern und transportieren. Außer mit Benzin ist $H_2$ auch mit Erdgas und vielen Treib- und Brennstoffen einschl. Biogasen (z.B. Mathon, $NH_3$, $NH_4$) gut mischbar. Solche Gase werden auch in der Abfallwirtschaft und von der chemischen und/oder biologischen Industrie Prozeßgas) verwendet. Die Prozesse/Umsetzungen können sowohl mit reinem Sauerstoff als auch mit dem Sauerstoff der Luft betrieben werden.

Die vielen Vorteile der Wasserstoff-Systemtechnik gilt es zu nutzen. Dabei ist meist die Zusammensetzung des für eine Reaktion verwendeten Gemisches von ausschlaggebender Bedeutung. Eine ständige Überwachung/ Kontrolle der Zusammensetzung eines Gasgemisches wäre neben der Überwachung von Druck und Temperatur sowie Volumen pro Zeiteinheit wünschenswert. Während dies sowohl für Druck und Temperatur mit üblichen Sensoren möglich ist als auch für die Messung der Strömungsgeschwindigkeit des Gases mittels Hitzdrahtanemometer, lassen die bekannten Gasanalysemethoden zu wünschen übrig. Für eine kontinuierliche Überwachung ist mit bekannten Geräten ein sehr großer Aufwand nötig. Meist beschränkt man sich in der Praxis auf Gas-Probenahmen bzw. einen "batch"-Betrieb. Für stetige Steuer- und Regelzwecke reicht dies jedoch nicht aus.

Aufgabe der Erfindung ist es, eine Vorrichtung zur Steuerung bzw. Regelung von Gasgemischen, die Hasserstoff und ggf. Sauerstoff (Luft, Wasser) enthalten, zu schaffen, die kontinuierlich und mit geringem Aufwand arbeitet.

Gelöst wird diese Aufgabe erfindungsgemäß mit den Mitteln des Patentanspruchs 1. Aus- und Weiterbildungen der Erfindung sind in weiteren Ansprüchen und in Ausführungsbeispielen enthalten. Die Erfindung umfaßt auch Abwandlungen und Kombinationen derselben. Mit ihr werden eine ganze Reihe von Vorteilen erreicht.

Dadurch, daß in einer Leitung zu einem Verbraucher - z.B. der eingangs geschilderten Art -, durch die ein Gemisch aus wenigstens zwei gas- bzw. dampfförmigen Stoffen strömt, von denen einer Wasserstoff ist oder enthält, wenigstens ein Sensor als Teil einer elektronischen Schaltung angeordnet ist, mittels deren der $H_2$-Anteil bestimmt wird, läßt sich eine kontinuierliche Steuerung/Regelung der Zusammensetzung eines $H_2$-haltigen Gasgemischs auf einfache Weise und mit geringem technischen Aufwand durchführen.

Die elektronische Schaltung ist hochintegrierbar (baut klein) mittels der Anwendung eines Prozessors, wie Mikroprozessors (MP) oder Mikrocomputers (MC), der je nach Vorgabeinformation an der zugehörigen Eingabeeinheit auf viele verschiedenartige Verbraucher und deren Betriebsabläufe und -anforderungen, z.B. Kennlinien charakteristischer Größen adaptiert werden kann. Die Muster solcher Betriebsabläufe und der Daten hierüber können mit Vorteil aus einem externen Speicher abrufbar sein.

Weitere Vorteile der Erfindung ergeben sich aus der nachfolgenden Beschreibung von Ausführungsbeispielen ohne Beschränkung hierauf. Die Ausführungsbeispiele sind in den beigefügten Zeichnungen rein schematisch dargestellt. Es zeigen:

Fig. 1 eine Gasleitung mit zwei Sensoren für mittelbare und unmittelbare Messungen;

Fig. 2 eine Schaltungseinzelheit zur elektrischen Beheizung eines Meßfühlers;

Fig. 3 eine Meßsonde mit elektrisch beheiztem und unbeheiztem Fühler;

Fig. 4 eine Meßsonde mit elektrochemischem Sensor (für galvanische Kette);

Fig. 5 eine Anordnung von mehreren Sensoren in Brückenschaltung in zwei Kanälen (ein Sensor dient als Referenz);

Fig. 6 eine elektronische Schaltung in Anwendung zum Steuern/Regeln eines Gasgemisches zum Verbraucher;

Fig. 7 eine Anwendung auf einen Gasgenerator mit nachgeschaltetem Brenner.

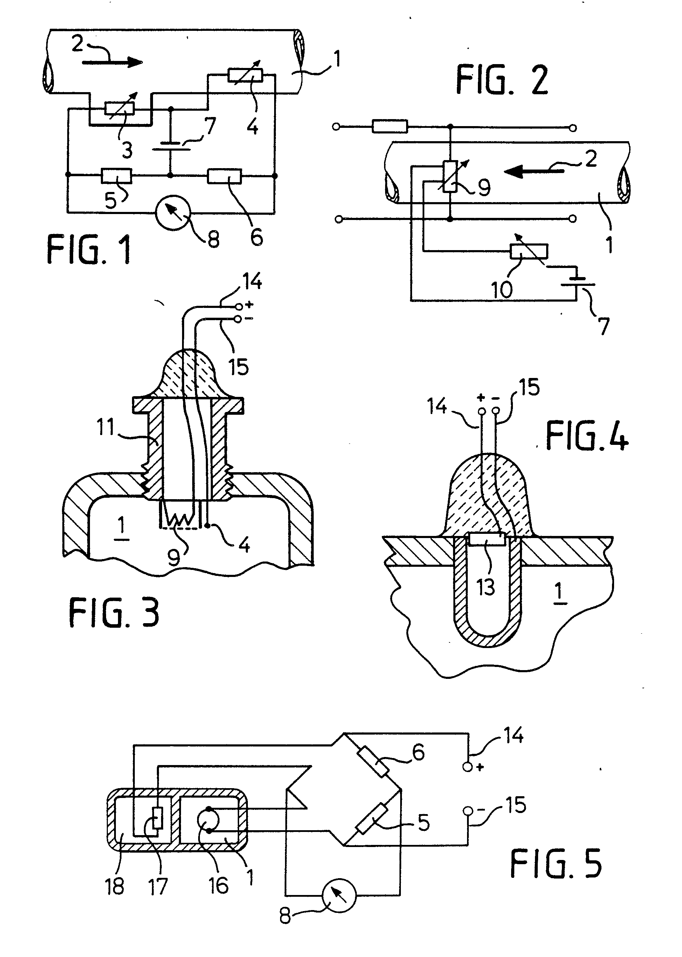

In den Ausführungsbeispielen haben gleiche Teile gleiche Bezugszeichen. Die Vorrichtung zur Steuerung oder Regelung von Gasgemischen, die Wasserstoff und ggf. Sauerstoff enthalten, weist nach Fig. 1 eine Rohrleitung 1 auf, welche von einem Fluid, wie Gas, in Richtung des Pfeils 2 durchströmt wird. In Strömungsrichtung liegen hintereinander ein elektrischer Widerstand 3 und ein Widerstand 4. Diese sind mit zwei festen Widerständen 5, 6 zu einer Brücke zusammengeschaltet. Die Brücke dient dem Temperaturabgleich/-nomierung, wobei der veränderliche Widerstand 3 nicht der Strömung ausgesetzt ist. Ferner sind eine Spannungsquelle 7 und ein Anzeigeinstrument 8 für den gemessenen Strom dargestellt, der die Widerstandsdrähte durchfließt. Der im Gasstrom liegende Widerstand ist der Meßfühler.

In Fig. 2 ist wiederum eine Rohrleitung 1 von Gas in Pfeilrichtung 2 durchströmt dargestellt, wobei ein veränderlicher Widerstand 9 elektrisch beheizbar ist - vorzugsweise mit Heizleitermaterial beschichtet-und angeschlossen an eine Spannungsquelle 7, die mit einem Regelwiderstand 10 für die Heizleistung in Linie geschaltet ist.

In Fig. 3 ist ein Meßkanal 1 dargestellt, in den eine Meßsonde 11 dicht eingeschraubt oder dgl. befestigt ist. An ihrer Spitze ist ein beheizter Fühler 9 und ein unbeheizter Fühler 4 oder ein katalytischer 9 oder nichtkanalytischer (so beschichteter) Fühler angeordnet, und zwar die Drähte 9 geschützt und 4 ungeschützt vor einer direkten Anströmung mit Fluid, wie Gas.

In Fig. 4 ist eine Meßsonde mit an sich bekanntem elektrochemischem oder Halbleiter-sensor - Teil einer galvanischen Kette - dargestellt. Dabei ist z.B. ein Festelektrolytrohr 12 in die Kanalwand von 1 dicht eingesetzt und eine Elektrode 13 bildet den räumlichen inneren Abschluß des Fühlerrohres, jedoch elektrisch den Gegenpol.

Bei allen Sonden wurden gemessene Signale (Differenzen) über Ausgleichs- bzw. Anschlußleitungen 14, 15 herausgeführt und nach Verstärkung der Signalverarbeitung zugeführt.

In Fig. 5 ist eine Widerstandsbrückenschaltung dargestellt, wobei ein Fühler 16 im Kanal 1 für strömendes Gas und ein weiterer Fühler 17 dem Kanal 18 für Referenzgas (stehend) zugeordnet ist. Ansonsten stimmt die Anordnung mit Fig. 1 überein.

Die Fühler 16, 17 sprechen dabei jeweils auf die unterschiedlichen Bedingungen (Abweichungen) in den Kanälen 1, 18 oder Kammern 1', 18' für das Gasgemisch bzw. Referenzgas an. Die Bedingung kann jeweils sein: unterschiedliche Gaszusammensetzung (Anteile z.B. von $H_2$, $O_2$, Luft. $H_2O$), unterschiedliche Wärmeabfuhr, Strom, Spannung, Widerstand, Kapazität, Magnetismus, Leitfähigkeit, Lichtstreuung, -brechung, -trübung, -reflexion o.a. zu einem oder zu mehreren sein. Entsprechende Sensoren hierfür sind an sich bekannt und brauchen deshalb nicht näher erläutert zu werden. Ein solcher Sensor kann z.B. auf $H_2$ oder $O_2$ ansprechen.

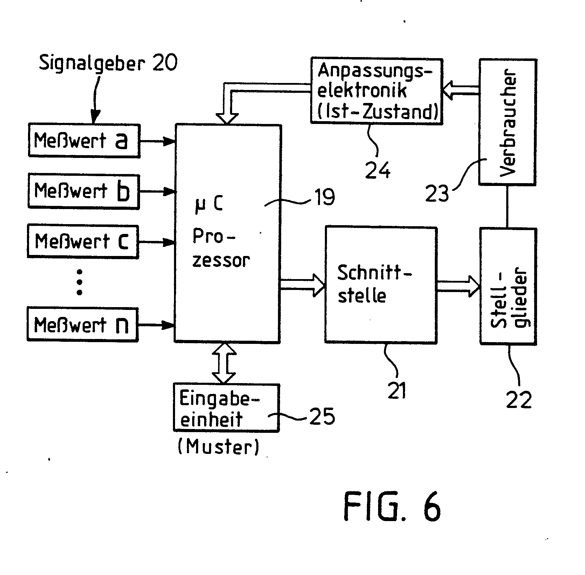

In Fig. 6 ist eine elektronische Schaltung in Anwendung zum Steuern bzw. Regeln eines Gasgemisches in einer Rohrleitung zum Verbraucher dargestellt. Dabei ist Kernstück dieser Schaltung ein Mikrocomputer oder Mikroprozessor 19 mit den Signalgebern 20 für die Meßwerte, in beliebiger Zahl (a bis n), von den Meßfühlern und deren Verstärkern kommend. Der Prozessor 19 übernimmt die Signalverarbeitung und Auswertung. Er ist seinerseits mit seiner Ausgabe über eine Schnittstelle 21 mit dem/den Stellorgan(en) 22 verbunden, die z.B. über Magnetventile, Pumpen o.a. die Zufuhr einer bestimmten Fluid(Gas)-zusammensetzung zum Verbraucher 23 steuern. Vom Verbraucher 23 führt eine Rückkopplung in einer Einheit 24 mit Korrekturgliedern zum Prozessor 19. Die Einheit 24 ist eine Anpassungselektronik an - gegenüber dem Ausgangszustand des Verbrauchers während dem Betrieb sich verändernden Größen (Ist-Zustand) und den daraus sich ergebenden Anforderungen an die Regelung.

Eine Eingabeeinheit 25 ist ebenfalls mit dem Prozessor 19 verbunden und dient der Eingabe im wesentlichen vorausbestimmbarer (programmierbarer) Größen (Muster), je nach Verbraucher und dessen bekanntem, ausgewählten typischen Betriebsverlauf, z.B. Kennlinien dabei charakteristischer Größen. Die Muster sind mit Vorteil als Datensatz/-paket aus einem externen Speicher abrufbar. Die Datensätze/-pakete sind mit unterschiedlichen Betriebszuständen/Modem abrufbar. Die Logik, MP oder MC24 lernt und merkt sich typische Betriebsabläufe und -anforderungen.

Mit Vorteil wählt ein adaptiver (lernfähiger, intelligenter) Prozessor bzw. Computer 24 solche Muster oder Musterprogramme durch Interpolation aus mehreren gespeicherten Mustern aus, die voraussichtlich den physikalischen Ist-Größen/Funktionen, die im Betrieb des jeweiligen Verbrauchers ablaufen, am nächsten kommen. Zusammen mit der Anpassungselektronik 24 läßt sich so die gleiche integrierte Schaltung (Fig. 6) auf Steckkarte für verschiedene Anwendungen bzw. verschiedene Verbraucher nutzen.

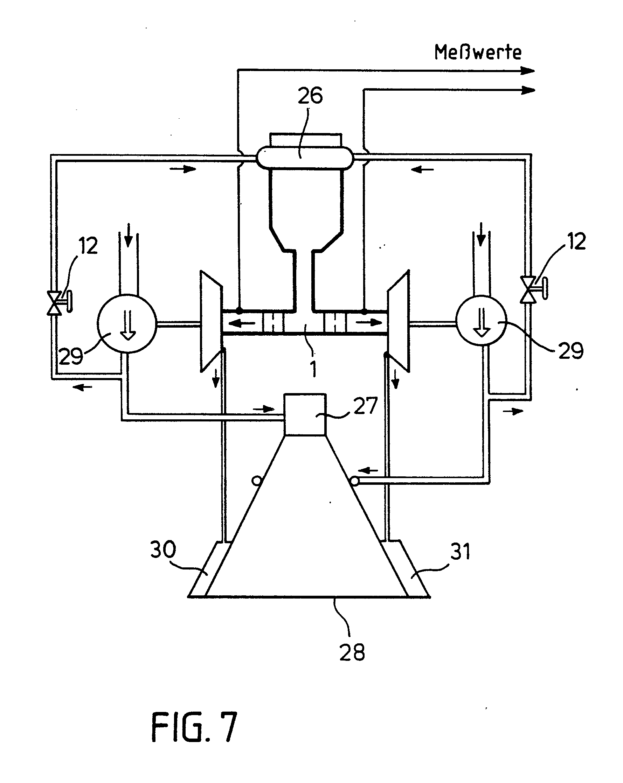

Ein Anwendungsbeispiel der Erfindung ist in Fig. 7 dargestellt. Es handelt sich dabei um einen Gasgenerator 26, wie er insbesondere in Brennkraftmaschinen mit Brennkammern 27 und Gas Expansionsdüsen von Raketen 28 verwendet wird. Dem Gasgenerator werden von Tanks/Speichern jeweils Wasserstoff oder Sauerstoff - zunächst flüssig, später gasförmig - über Turbopumpen 29 zugeführt. Deren Gasmassendurchsatz beträgt hierbei etwa 5 kg $H_2$ und 5 kg $O_2$/pro sec., die jeweils von eigenen Antriebsturbinen - auf gleicher Welle - angetrieben werden. Deren Heißgasauslässe 30, 31 können mit der Düse 28 verbunden sein. Brennstoff, wie $H_2$. kann auch aus Metallhydridspeichern in bekannter Weise entnommen werden, falls für den Verbraucher erwünscht.

Gesteuert bzw. geregelt werden die Stellglieder 22, wie Ventile, Pumpen o.ä. gemäß den Stellgrößen, die aus den im Prozessor 19 verarbeiteten Meßsignalen (a-n) nach Auswerten und Verarbeiten u. Vergleich mit Ist-Zustand) entsprechend den Verbrauchsanforderungen über die Schnittstelle 21 zugeführt werden.

Die Steuerung/Regelung kann sowohl als auch für $H_2$, $O_2$. Luft, $H_2O$ und/oder für andere Stoffgemische (für ihr Verhältnis) angewandt werden u.a. auch

a) in Kraftmaschinen,

b) zur Wärmeerzeugung auch b) gekoppelt mit a),

c) zur Stromerzeugung (Kleinkraftwerke, Brennstoffzellen),

d) in Mischung mit Biogas, Stadtgas, Ferngas, Benzin u.a. Brenn- und Grundstoffen für chemische oder physikalische Weiterverarbeitung z.B. in technischen biologischen oder chemischen Reaktoren, auch im Kreislauf.

Abwandlungen der Ausführungsbeispiele und ihre Kombination liegen selbstverständlich im Rahmen der Erfindung. Zum Beispiel können insbesondere Energie-Kraft- oder Wärmeerzeugungseinrichtungen und/oder Verbraucher zu einem jeweiligen System zusammengefaßt sein, das autark und besonders für die Zwecke der Luft- und Raumfahrt geeignet ist ohne hierauf beschränkt zu sein. Je nach Verbraucher, Gase(-gemisch) und System werden die erwähnten Sensoren ausgewählt und/oder kombiniert. (Das zu regelnde Gemisch kann insbesondere auch Luft und/oder Wasser enthalten). Gleiches gilt für die Stellglieder, wie Ventile, Drosseln, Klappen o.a. Stellantriebe, wie elektronisch ansteuerbare (Drehwinkel codierte) Schrittmotoren, Dosierer, wie proportional angetriebene elektrische oder hydraulische Motoren, Pumpen falls erforderlich, wie Peristaltikpumpen, Membranpumpen, auch elektromagnetisch, mit Ultraschall oder piezoelektrisch betätigt, in gewünschter kombination zur Herstellung und Einhaltung der jeweils erwünschten Mischung der Bestandteile, eines Gasgemisches unter Beachtung der jeweiligen Sicherheitsvorschriften. Erwünscht sind nicht all zu große (<20 %) Abweichungen vom stöchiometrischen Verhältnis Sauerstoff zu Brennstoff, wenn als letzterer $H_2$ verwendet wird.

## Ansprüche

1. Vorrichtung zur Steuerung bzw. Regelung von Gasgemischen, die Wasserstoff und ggf. Sauerstoff enthalten, wobei wenigstens ein Sensor den Ist-zustand des Gemisches/Bestandteils erfaßt und nach Vergleich mit vorgegebenen Werten über eine Steuer- bzw. Regelstrecke die Zusammensetzung des Gemisches mittels Stellglied in gewünschter Weise geändert wird, dadurch gekennzeichnet, daß

- in einer unmittelbar oder mittelbar zu einem Verbraucher führenden Leitung (1) für ein Gemisch aus wenigstens zwei gas- bzw. dampfförmigen Stoffen (2), von denen wenigstens einer Wasserstoff ist, wenigstens ein Sensor (20) angeordnet ist, mit dessen Hilfe der $H_2$-Anteil direkt oder indirekt bestimmt wird,

- die von dem/den Sensor(en) generierten Meßsignale (a bis n) verstärkt und über Analog/Digital-Wandler einer Schaltung zur Signal verarbeitung und -auswertung zugeführt werden, die einen Prozessor (19) enthält, dem Vorgabeinformationen (Musterfunktionen), an einer Eingabeeinheit (25) vorgegeben sind, zur Auswahl und Vergleich mit dem momentanen Ist-Zustand von Betriebsanforderungen des Verbrauchers (23) in einer Anpassungselektronik (24),

- der Prozessor (19) über eine Schnittstelle (21) mit den Stellgliedern (22) der Steuer- bzw. Regelstrecke des Verbrauchers (23) verbunden ist.

2. Vorrichtung nach Anspruch 1, **dadurch gekennzeichnet,** daß mehrere Sensoren (3, 4, 5, 6) in Brückenschaltung zusammengeschaltet sind, wovon wenigstens einer, vorzugsweise zwei parallele von dem zu messenden Gas (2) angeströmt sind.

3. Vorrichtung nach Anspruch 1 oder 2, **dadurch gekennzeichnet,** daß wenigstens ein Sensor (9) als Referenz geschaltet und/oder beheizt ist.

4. Vorrichtung nach einem der Ansprüche 1 bis 3, **dadurch gekennzeichnet,** daß der Sensor (20) ein elektrischer, chemischer, optischer, elektrochemischer oder elektrooptischer (optronischer) Sensor ist.

5. Vorrichtung nach einem der vorhergehenden Ansprüche, **dadurch gekennzeichnet,** daß dem Prozessor (19) Informationen über das Gemisch bzw. einen bestimmten Bestandteil (Haupt-) als auch über dessen Zustand (Partial-)Druck, Temperatur, Volumen zugeführt werden und der Prozessor durch Interpolation seines Rechners die Musterfunktion (für das Stellen/ Regeln) auswählt, welche zum momentanen Ist-zustand nächstliegend ist.

6. Vorrichtung nach einem der vorhergehenden Ansprüche, **dadurch gekennzeichnet,** daß die am Prozessor (19) eingegebene Information bezüglich Musterfunktion zur Änderung eines Gemisches neben Daten über Druck, Temperatur, Volumen, auch solche über das Zeitverhalten in Abhängigkeit von ausgewählten typischen Betriebsverläufen des Verbrauchers (23) enthält.

7. Vorrichtung nach einem der vorhergehenden Ansprüche **dadurch gekennzeichnet,** daß der Verbraucher (23) eine Kraft-, insbesondere eine Wärmekraftmaschine, ein Wärme- und/oder Stromerzeuger ist.

8. Vorrichtung nach einem der vorhergehenden Ansprüche **dadurch gekennzeichnet,** daß der Verbraucher (23) Teil eines chemischen, biologischen, technischen, offenen oder bevorzugt geschlossenen Kreislaufs ist.

9. Vorrichtung nach einem der vorhergehenden Ansprüche, **dadurch gekennzeichnet,** daß der Verbraucher (23) einen chemischen oder biologischen Reaktor enthält.

10. Vorrichtung nach einem der vorhergehenden Ansprüche, **dadurch gekennzeichnet,** daß der Verbraucher (23) als Gasgenerator, insbesondere eines Raketenmotors ausgebildet ist, bei dem die Treibstoffzufuhr ($H_2$ und $O_2$) geregelt wird.

5

FIG. 1

FIG. 2

FIG. 3

FIG. 4

FIG. 5

10399

Signalgeber 20

| Meßwert a |
| Meßwert b |
| Meßwert c |
⋮
| Meßwert n |

μ C
Prozessor — 19

Anpassungselektronik
(Ist-Zustand)
24

Verbraucher
23

Schnittstelle
21

Stellglieder
22

Eingabeeinheit — 25
(Muster)

FIG. 6

10399

FIG. 7

10399